# EUROPÄISCHE PATENTANMELDUNG

(11) **EP 0 569 674 A1**
(43) Veröffentlichungstag der Anmeldung: **18.11.1993**
(21) Anmeldenummer: 93103721.2
(22) Anmeldetag: 09.03.1993
(51) Int. Cl.: B65G 47/90, B65B 35/36

(54) **Vorrichtung zum Ausrichten, Gruppieren, Aufnehmen und Transport länglicher Stückgüter**

(30) Priorität: 14.05.1992 DE 4215361
(71) Anmelder: HANDTMANN A-PUNKT AUTOMATION GMBH, D-88255 Baienfurt (DE)
(72) Erfinder: Willburger, Peter, Dipl.-Ing. (FH), D-88255 Baindt (DE); Putschler, Georg, Dipl.-Ing. (FH), D-88273 Fronreute (DE); Strasser, Karl-Heinz, D-88276 Berg b. Ravensburg (DE)
(74) Vertreter: Engelhardt, Guido, Dipl.-Ing.

(57) **Zusammenfassung**

Eine Vorrichtung (1) zur Aufnahme und zum Transport länglicher Stückgüter (10) besteht aus zwei bügelförmigen Greifarmen (11, 12), die in Längsrichtung der aufzunehmenden Stückgüter (10) begrenzt verschwenkbar an einem zustellbaren Tragarm (4) angebracht sind. Außerdem können zwischen den Greifarmen (11, 12) ein oder mehrere höhenverstellbar angebrachte Niederhalter (21, 22) angeordnet und jeweils paarweise zusammenwirkende Richtglieder (31, 32) vorgesehen werden, die achssenkrecht zu den Stückgütern (20) verstellbar an dem Tragarm (4) angebracht sind.

Durch diese Ausgestaltung ist es möglich, die Stückgüter (10) vor der Aufnahme auszurichten und in eine verpackungsgerechte Form zu bringen, außerdem können diese sicher transportiert und abgelegt werden, ohne daß manuelle Tätigkeiten notwendig sind.

## Beschreibung

Die Erfindung bezieht sich auf eine Vorrichtung zur Aufnahme und zum Transport länglicher Stückgüter, insbesondere von Würsten.

Die in einer Wurstfüllmaschine portionierten und abgedrehten Würste werden bisher von Hand von dieser Maschine abgenommen und gegebenenfalls unmittelbar in Verpackungsbehältnissen einer nachgeschalteten Verpackungsmaschine oder in schalenförmige Transportbehälter eingelegt, mittels denen die Würste der Verpackungsmaschine zugeführt werden. Dort müssen diese wiederum in die Hand genommen und lageorientiert in die Verpackungsbehältnisse eingelegt werden.

Diese Handarbeiten sind nicht nur sehr aufwendig und somit kostenintensiv, da mehrere Personen erforderlich sind, um die aus der Wurstfüllmaschine ausgestoßenen Würste in die Verpackungsbehältnisse einer Verpackungsmaschine überzuführen, sondern auch unhygienisch. Jede Wurst ist nämlich mitunter mehrfach in die Hand zu nehmen und auch längere Zeit in der Hand zu halten. Ein derartiger Transport von Würsten von einer Wurstfüllmaschine zu einer Verpackungsmaschine ist nicht rationell und auch nicht zeitgemäß.

Aufgabe der Erfindung ist es daher, eine Vorrichtung zu schaffen, mit der es möglich ist, die in einem Transportbehälter befindlichen Würste auf maschinelle Weise und ohne daß diese dabei von Menschen berührt werden müssen, zu transportieren und beispielsweise in Verpackungsbehältnisse einer Verpackungsmaschine einzulegen. Der dazu erforderliche Bauaufwand soll gering gehalten werden, vor allem aber soll errecht werden, daß die Betriebskosten durch Personalreduzierung in einem erheblichen Maße gegenüber der bisher praktizierten Verfahrensweise gesenkt werden können und daß auch die unterschiedlichen Arbeitsgeschwindigkeiten miteinander verketteter Maschinen ohne Schwierigkeiten auszugleichen sind. Des weiteren sollen ohne Schwierigkeiten eine Einstellung auf unterschiedliche Produkte vorgenommen und Toleranzen ausgeglichen werden können.

Gemäß der Erfindung ist die Vorrichtung zur Aufnahme und zum Transport länglicher Stückgüter, insbesondere von Würsten, gekennzeichnet durch zwei bügelförmige Greifarme, die in Längsrichtung der aufzunehmender Stückgüter begrenzt verschwenkbar an einem zustellbaren Tragarm angebracht sind.

Zweckmäßig ist es hierbei des weiteren, zwischen den Greifarmen einen oder mehrere an dem Tragarm vorzugsweise höhenverstellbar angebrachte Niederhalter anzuordnen und/oder zwei oder mehrere jeweils paarweise zusammenwirkende Richtglieder vorzusehen, die achssenkrecht zu den Stückgütern verstellbar an dem Tragarm gehalten sind.

Die Greifarme, die Niederhalter und/oder die Richtglieder können ganz oder teilweise durch Drahtbügel gebildet sein, und zu deren Verstellung können jeweils ein oder mehrere auf diese unmittelbar oder über Zwischenglieder einwirkende Zug- oder Druckfedern sowie ein oder mehrere, deren Verstellkraft entgegengerichtet wirksame vorzugsweise durch Druckluft betätigbare Servoeinrichtungen vorgesehen werden.

Die beiden Greifarme können in einfacher Ausgestaltung jeweils aus einem verschwenkbar an einem Tragarm gelagerten Halter und einem an diesem vorzugsweise auswechselbar angebrachten seitlich auskragenden und C-förmig gebogenen Bügel zusammengesetzt sein, wobei an den Haltern eine oder mehrere zwischen diesen angeordnete Zugfeder und jeweils eine diesen entgegenwirkende Servoeinrichtung abgestützt sein sollte.

Die Niederhalter können durch einen oder mehrere vorzugsweise auswechselbar an einem höhenverstellbar an dem Tragarm abgestützten Querholm, an dem eine oder mehrere in Richtung der Stückgüter wirksamen Druck- oder Zugfedern sowie eine entgegengesetzt wirksame Servoeinrichtung abgestützt sind, angebrachte rechtwinkelig ausgebildete Bügel gebildet werden.

Vorteilhaft ist es ferner, die beiden Richtglieder durch zwei achssenkrecht zu der Verstellrichtung der Greifarme gegeneinander verschiebbar geführte Platten, die durch die Kraft von an diesen abgestützten Zug- oder Druckfedern aufeinander zu- und mittels Servoeinrichtungen auseinander schiebbar sind, und an den Platten vorzugsweise auswechselbar angebrachte zwischen die Stückgüter eingreifende Bügel zu bilden.

Der Tragarm sollte des weiteren höhenverstellbar, verschiebbar und/oder um eine Achse drehbar angeordnet sein.

Wird eine Vorrichtung zur Aufnahme und zum Transport länglicher Stückgüter, insbesondere von Würsten, gemäß der Erfindung ausgebildet, so ist es nicht nur möglich, die Würste vor dem Transport auszurichten und gegebenenfalls in eine verpackungsgerechte Form zu bringen, sondern diese auch sicher aufzunehmen und zu einer anderen Station, beispielsweise zu einer Verpackungsmaschine, überzuführen und dort in Verpackungsbehältnisse einzulegen. Bei geringem Bedienungsaufwand ist somit eine maschinelle und kontinuierliche Arbeitsweise gegeben. Dabei können auch unterschiedliche Arbeitsgeschwindigkeiten aneinander angeschlosser Maschinen ausgeglichen werden. Des weiteren ist eine sehr schonende Behandlung der Stückgüter gegeben, so daß auch Würste mit Naturdarm aufgenommen und transportiert werden können. Beschädigungen und somit Ausschuß ist demnach weitgehend vermieden.

Ferner ist von Vorteil, daß die vorschlagsgemäß ausgebildete Vorrichtung eine hohe Leistung aufweist und ohne Schwierigkeiten auf unterschiedliche Produkte einstellbar ist, und daß durch diese auch große Toleranzen der aufgenommenen und zu befördernden Produkte auszugleichen sind. Bei der Aufnahme und beim Weitertransport werden somit die Stückgüter nicht von Menschen berührt, und es sind keine manuellen Tätigkeiten notwendig, eine hygienische Handhabung ist demnach gewährleistet. Die Wurstproduktion kann somit mit Hilfe dieser Vorrichtung von der Wurstfüllmachine bis zur Verpackung mit geringem baulichen Aufwand automatisiert werden.

In der Zeichnung ist ein Ausführungsbeispiel der gemäß der Erfindung ausgebildeten Vorrichtung zur Aufnahme und zum Transport von Stückgütern dargestellt, das nachfolgend im einzelnen erläutert ist. Hierbei zeigen:
- Figur 1: die Vorrichtung in Vorderansicht,
- Figur 2: die Vorrichtung nach Figur 1 in Draufsicht, jeweils in einer schematischen Darstellung und
- Figuren 3, 4 und 5: die Vorrichtung nach Figur 1, in Vorderansicht, Seitenansicht und Draufsicht in gegenständlicher Darstellung.

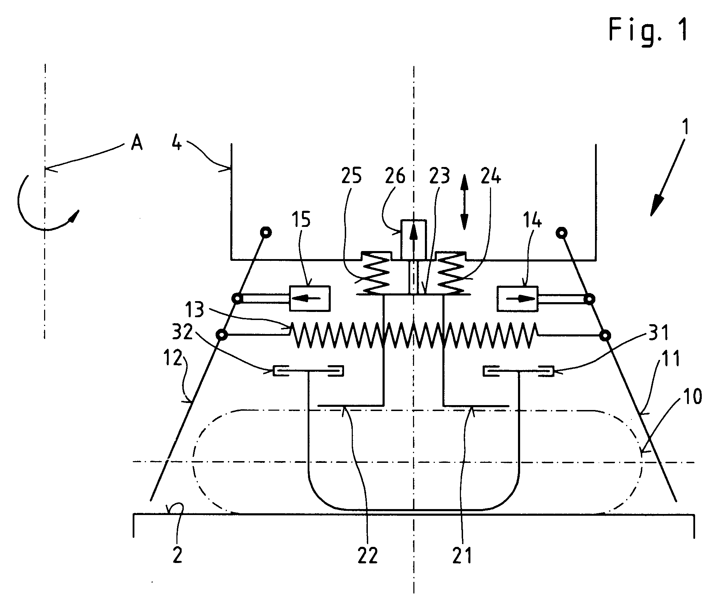

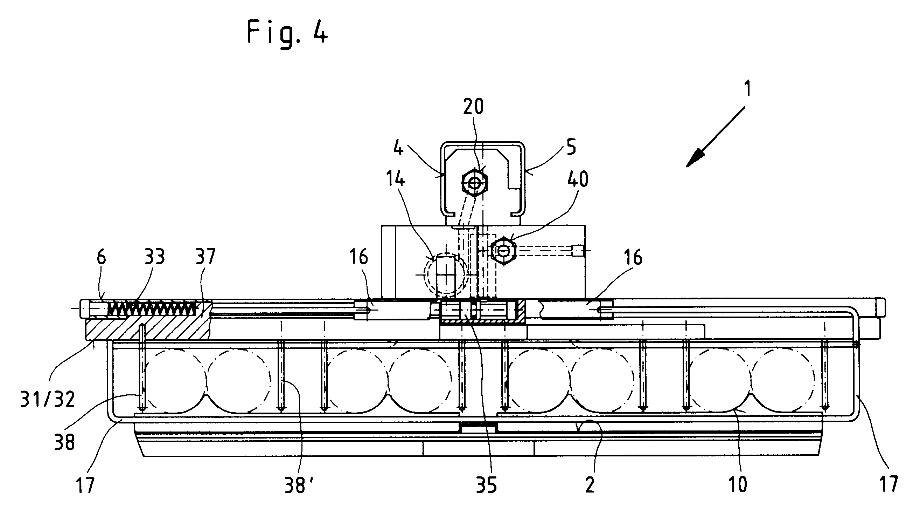

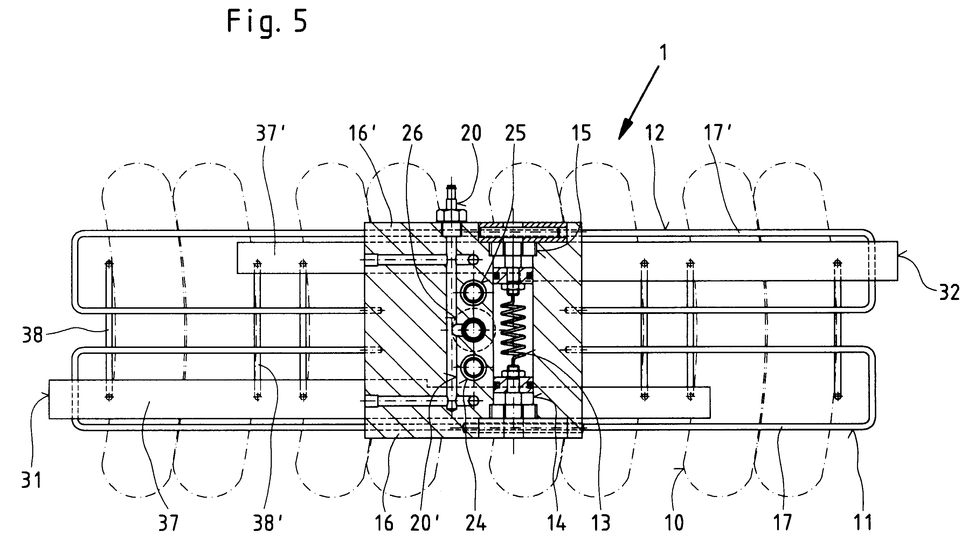

Die in den Figuren 1 bis 5 dargestellte und jeweils mit 1 bezeichnete Vorrichtung dient zur Aufnahme und zum Transport von länglichen Stückgütern, beispielsweise von auf einer Auflage 2 gelagerten Würsten 10, und besteht im wesentlichen aus zwei an einem Tragarm 4 verschwenkbar gelagerten Greifarmen 11 und 12, höhenverstellbaren Niederhaltern 21 und 22 und quer zu den Würsten 10 verschiebbaren Richtgliedern 31 und 32, die ebenfalls an dem Tragarm 4 angebracht sind. Mittels der verschwenkbar gelagerten Greifarme 11 und 12 werden die Würste 10 aufgenommen, die Niederhalter 21 und 22 dienen dabei und bei Verstellbewegungen des Tragarmes 4 als Gegenlager, so daß die Würste 10 stets sicher gehalten sind. Und mit Hilfe der Richtglieder 31, 32 können die Würste 10 z. B. paarweise zusammengeschoben werden.

Die Greifarme 11 und 12 werden zur Aufnahme der Würste 10 durch die Kraft einer zwischen diesen angeordneten Feder 13 zusammengezogen und können mit Hilfe von Servoeinrichtungen 14 und 15 nach außen geschwenkt werden, um aufgenommene Würste, beispielsweise in einer Verpackungsmaschine, abzulegen. Auch die beiden Niederhalter 21 und 22, die an einem Querholm 23 angebracht sind, wirken über Federn 24 und 25 auf die Würste 10 ein, mit Hilfe einer Servoeinrichtung 26 ist der Querholm 23 rückstellbar. Des weiteren sind die beiden Richtglieder 31 und 32 durch die Kraft von Federn 33 und 34, die in einer an dem Tragarm 4 befestigten Schiene 6 eingesetzt und an dieser abgestützt sind, aufeinander zu und durch Servoeinrichtungen 35 und 36 auseinanderschiebbar.

Die Greifarme 11 und 12 bestehen bei dem gezeigten Ausführungsbeispiel jeweils aus einem mittels Gelenkbolzen 18, 18' an dem Tragarm 4 begrenzt verschwenkbar gelagerten Halter 16, 16', an denen sowohl die Feder 13 wie auch die Servoeinrichtungen 14 und 15 abgestützt sind, sowie in die Halter 16, 16' auswechselbar eingesetzte Bügel 17, 17'. Auch die Niederhalter 21, 22 sind durch rechtwinklig gebogene Bügel 27 und 27', die an dem Querholm 23 auswechselbar gehalten sind, gebildet. Die Richtglieder 31, 32 sind hierbei aus Platten 37, 37', auf die die Federn 33 bzw. 34 sowie die Servoeinrichtungen 35 bzw. 36 einwirken, sowie in die Platten 37, 37' ebenfalls auswechselbar eingespannten Bügeln 38, 38' zusammengesetzt. Die Platten 37, 37' sind jeweils mit einem Anschlag 39, 39' ausgestattet, auf die die Servoeinrichtungen 35 bzw. 36, um die Bügel 38, 38' der Richtglieder 31, 32 auseinanderzuschieben, angreifen.

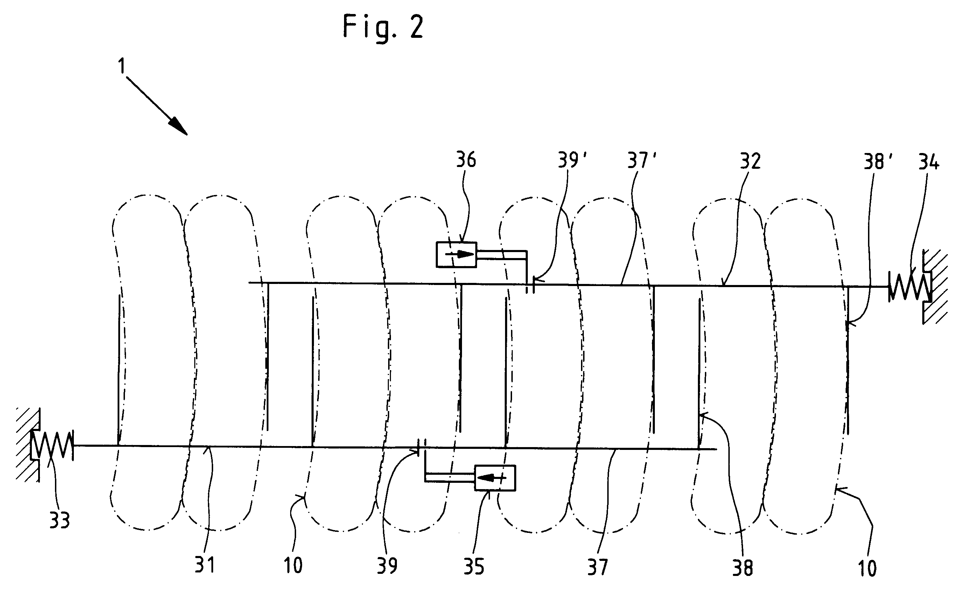

Die Servoeinrichtungen 14, 15, 26, 35 und 36 der Vorrichtung 1 werden durch Druckluft betätigt. Dazu sind an dem Tragarm 4 Druckluftanschlüsse 20 und 40 vorgesehen, von denen über entsprechende Leitungen 20' bzw. 40' die Druckluft den Servoeinrichtungen 14, 15 und 26, die gemeinsam betätigbar sind, bzw. den Servoeinrichtungen 35, 36 zuströmt. Bei einer Beaufschlagung wirken die Servoeinrichtungen 14, 15, 26, 35, 36 jeweils den den Greifarmen 11, 12, den Niederhaltern 21, 22 bzw. den Richtgliedern 31, 32 zugeordneten Federn 13, 24, 25 bzw. 33, 34 entgegen. Um dies bei den Richtgliedern 31, 32 bewerkstelligen zu können, sind diese, wie dies der schematischen Darstellung in Figur 2 zu entnehmen ist, mit den Anschlägen 39 und 39' ausgestattet, über die die Servoeinrichtungen 35 bzw. 36 mit den Richtgliedern 31, 32 koppelbar sind.

Der Tragarm 4 der Vorrichtung 1 ist in einer Schiene 5 verfahrbar, auch kann die Vorrichtung 1 um eine Achse A gedreht und in der Höhe verstellt werden, so daß die Würste 10, die bei dem gezeigten Ausführungsbeispiel mittels der Auflage 2 durch ein Förderband 3 in den Bereich der Vorrichtung 1 transportiert werden, durch Verfahren und/oder Verdrehen des Tragarmes 4 einer zugeordneten Station zuführbar sind.

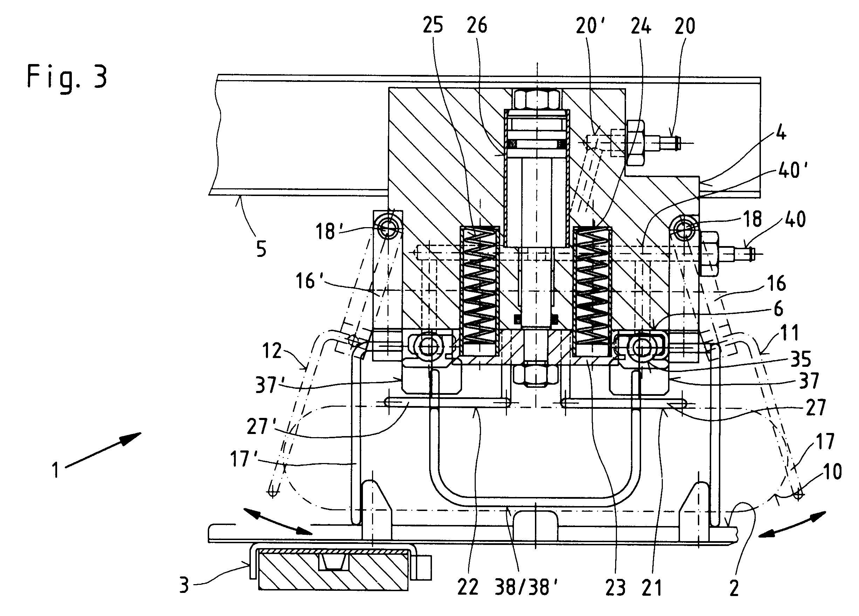

Sollen die auf der Auflage 2 befindlichen Würste 10 von der Vorrichtung 1 aufgenommen werden, so sind mit Hilfe der Servoeinrichtungen 14 und 15 die Greifarme 11 und 12, wie dies in Figur 3 strichpunktiert eingezeichnet ist, nach außen zu verschwenken. Werden die Servoeinrichtungen 14 und 15 entlüftet, so werden die Greifarme 12 und 13 durch die Kraft der an diesen abgestützten Feder 13 entsprechend der Darstellung in Figur 3 nach innen gezogen, so daß die Bügel 17, 17' die Würste 10 untergreifen. Die Bügel 27 und 27' der Niederhalter 21, 22 wirken dabei als Gegenlager, da diese durch die Kraft der Federn 24, 25 an den Würsten 10 anliegen.

Bevor jedoch die Würste 10 von den Greifarmen 11, 12 aufgenommen wurden, wurden durch die Richtglieder 31, 32 die Würste 10 paarweise geordnet. Beim Zustellen der Vorrichtung 1 wurden nämlich die Bügel 38, 38' der Richtglieder 31, 32 in einer auseinandergeschobenen Lage, da die Servoeinrichtungen 35, 36 ebenfalls von Druckluft beaufschlagt waren, zwischen die Würste 10 eingeführt. Und durch Entlüften der Servoeinrichtungen 35, 36 zusammen mit den Servoeinrichtungen 14, 15 wurden die Richtglieder 31, 32 durch die Kraft der auf diese einwirkenden Federn 34, 35 zusammengeschoben, so daß die sich zwischen zwei zugeordneten Bügeln 38, 38' befindlichen Würste 10 während der Aufnahme durch die Greifarme 11, 12 ausgerichtet wurden.

Zur Entnahme der Würste 10 aus der Vorrichtung 1 wird den Servoeinrichtungen 14, 15 Druckluft zugeführt. Dadurch werden die Greifarme 11, 12 seitlich weggeschwenkt. Und da gleichzeitig die Niederhalter 21, 22 durch die Kraft der Federn 24, 25 auf die Würste 10 einwirken, werden diese aus der Vorrichtung 1 herausgedrückt, so daß ein rasches Entleeren sichergestellt ist. Mittels der Servoeinrichtungen 26, 35 und 36 werden die Niederhalter 21, 22 sowie die Richtglieder 31 und 32 sodann in die Ausgangslage zurückgeführt.

## Patentansprüche

1. Vorrichtung (1) zur Aufnahme und zum Transport länglicher Stückgüter, insbesondere von Würsten (10),
**gekennzeichnet durch,**
zwei bügelförmige Greifarme (11, 12), die in Längsrichtung der aufzunehmenden Stückgüter (10) begrenzt verschwenkbar an einem zustellbaren Tragarm (4) angebracht sind.

2. Vorrichtung nach Anspruch 1,
**dadurch gekennzeichnet,**
daß zwischen den Greifarmen (11, 12) ein oder mehrere an dem Tragarm (4) vorzugsweise höhenverstellbar angebrachte Niederhalter (21, 22) angeordnet sind.

3. Vorrichtung nach Anspruch 1 oder 2,
**dadurch gekennzeichnet,**
daß zwischen den Greifarmen (11, 12) zwei oder mehrere jeweils paarweise zusammenwirkende Richtglieder (31, 32) vorgesehen sind, die achssenkrecht zu den Stückgütern (10) verstellbar an dem Tragarm (4) angeordnet sind.

4. Vorrichtung nach einem oder mehreren der Ansprüche 1 bis 3,
**dadurch gekennzeichnet,**
daß die Greifarme (11, 12), die Niederhalter (21, 22) und/oder die Richtglieder (31, 32) ganz oder teilweise durch Drahtbügel (17, 17', 27, 27', 38, 38') gebildet sind.

5. Vorrichtung nach einem oder mehreren der Ansprüche 1 bis 4,
**dadurch gekennzeichnet,**
daß zur Verstellung der Greifarme, (11, 12), der Niederhalter (21, 22) und/oder der Richtglieder (31, 32) jeweils ein oder mehrere auf diese unmittelbar oder über Zwischenglieder einwirkende Zug- oder Druckfedern (13, 24, 25, 33, 34) und ein oder mehrere, deren Verstellkraft entgegengerichtet wirksame vorzugsweise durch Druckluft betätigbare Servoeinrichtungen (14, 15, 26, 35, 36) vorgesehen sind.

6. Vorrichtung nach einem oder mehreren der Ansprüche 1 bis 5,
**dadurch gekennzeichnet,**
daß die beiden Greifarme (11, 12) jeweils aus einem verschwenkbar an einem Tragarm (4) gelagerten Halter (16, 16') und einem an diesem vorzugsweise auswechselbar angebrachten seitlich auskragenden und C-förmig gebogenen Bügel (17, 17') zusammengesetzt sind.

7. Vorrichtung nach Anspruch 6,
**dadurch gekennzeichnet,**
daß an den Haltern (16, 16') der Greifarme (11, 12) eine oder mehrere zwischen diesen angeordnete Zugfeder (13) und jeweils eine diesen entgegenwirkende Servoeinrichtung (14, 15) abgestützt sind.

8. Vorrichtung nach einem oder mehreren der Ansprüche 1 bis 7,
**dadurch gekennzeichnet,**
daß die Niederhalter (21, 22) durch einen oder mehrere vorzugsweise auswechselbar an einem höhenverstellbar an dem Tragarm (4) abgestützten Querholm (3) angebrachte winkelig ausgebildete Bügel (27, 27') gebildet sind.

9. Vorrichtung nach Anspruch 8,
**dadurch gekennzeichnet,**
daß an dem Querholm (23) eine oder mehrere in Richtung der Stückgüter (10) wirksamen Druck- oder Zugfedern (24, 25) sowie eine entgegengesetzt wirksame Servoeinrichtung (26) abgestützt sind.

10. Vorrichtung nach einem oder mehreren der Ansprüche 1 bis 9,
**dadurch gekennzeichnet,**
daß die beiden Richtglieder (31, 32) durch zwei achssenkrecht zu den Greifarmen (11, 12) gegeneinander verschiebbar geführte Platten (37, 37') und an diesen vorzugsweise auswechselbar angebrachten zwischen die Stückgüter (16) eingreifende Bügel (38, 38') gebildet sind.

11. Vorrichtung nach Anspruch 10,
**dadurch gekennzeichnet,**
daß die beiden Platten (37, 37') der Richtglieder (31, 32) durch die Kraft von an diesen abgestützten Zug- oder Druckfedern (33, 34) aufeinander zu- und mittels Servoeinrichtungen (35, 36) auseinanderschiebbar sind.

12. Vorrichtung nach einem oder mehreren der Ansprüche 1 bis 11,
**dadurch gekennzeichnet,**
daß der Tragarm (4) höhenverstellbar, verschiebbar und/ oder um eine Achse (A) drehbar angeordnet ist.
